# EUROPÄISCHE PATENTSCHRIFT

(11) **EP 2 152 616 B1**
(45) Veröffentlichungstag und Bekanntmachung des Hinweises auf die Patenterteilung: **01.12.2010**
(21) Anmeldenummer: 08749291.4
(22) Anmeldetag: 02.05.2008
(51) Int. Cl.: B65G 59/02, B62B 5/00

(54) **VERFAHREN UND VORRICHTUNG ZUM DEPALETTIEREN UND FÖRDERN VON ROLLWAGEN**
METHOD AND DEVICE FOR DE-PALLETIZING AND MOVING ROLL CARTS
PROCEDE ET DISPOSITIF DE DEPALETTISATION ET D'ACHEMINEMENT DE CHARIOTS

(30) Priorität: 11.05.2007 DE 102007022686
(43) Veröffentlichungstag der Anmeldung: 17.02.2010
(73) Patentinhaber: KHS GmbH, Juchostrasse 20 44143 Dortmund (DE)
(72) Erfinder: JUNGHANS, Joachim, 60326 Frankfurt (DE)
(86) Internationale Anmeldenummer: PCT/EP2008/003544
(87) Internationale Veröffentlichungsnummer: WO 2008/138500

(56) Entgegenhaltungen:
- WO-A-00/51898
- JP-A- 2003 136 905
- US-A- 4 815 916

## Beschreibung

Erfindung betrifft ein Verfahren und eine Vorrichtung zum Depalettleren und Fördern von Rollwagen, so genannten Dollies (Dolly), welche mindestens zwei um eine vertikale Achse drehbar gelagerte Lenkräder aufweisen. Dabei werden die Rollwagen In einem Aufgabebereich angeliefert, mittels einer Hubvorrichtung, beispielsweise einem Knickarmroboter bedarfsweise depalettiert und/oder abgestapelt und nachfolgend auf eine, dem Aufgabebereich angrenzende Transport-oder Förderstrecke, überführt. Wesentlich hierbei ist, dass die Ausrichtung eines Rollwagens und/oder dessen Lenkräder vor dem Aufsetzten auf der Transport- und Förderstrecke mit mindestens einem Sensor, zum Beispiel einer digitalen Kamera erfasst wird, wobei der Sensor mit einer geeigneten rechnergestützten Auswerte- und Steuereinheit verbunden ist, und nachfolgend die dreidimensionale Bewegung der Hubvorrichtung, in der Regel ein Knickarmroboter, in Abhängigkeit von den erfassten Messwerten gesteuert wird.

In der Waren- und Produktiogistik gewinnen rollende Transportsysteme immer mehr an Bedeutung. Dies sind rollbare Paletten, so genannte Dollies. Ein derartiges Dolly ist in der EP 0 251 439 A2 gezeigt. Diese kleinen Rollwagen haben In der Regel eine Grundfläche, die der Hälfte oder einem Viertel einer EU-Palette entspricht, wobei von den vier Rollen üblicherweise ein Paar Lenkräder darstellen, die um eine vertikale Achse drehbar gelagert sind. Das zweite Paar ist nicht lenkbar ausgeformt. EP 1 149 753 A2 zeigt einen derartigen Dolly, dort als Transportroller bezeichnet. Bei Mehrwegsystemen werden die Dollies auf einer Europalette gestapelt an den Lieferanten zurückgegeben und von diesem mit neuer Ware belegt. Die beladenen Rollwagen werden auf Transportpaletten, üblicherweise Europaletten, zusammengestellt, fixiert und erneut ausgeliefert.

DE 34 42 111 C2 offenbart eine Vorrichtung und ein Verfahren, bei weichem mittels einer Transportstange, die mit Mitnehmern versehen ist, eine einzelne beladene Rollpalette gefördert wird. Problematisch bei einem Rücknahmesystem ist es allerdings, dass die in der Regel gestapelten Rollwagen nicht gleichförmig ausgerichtet sind und vor allem die Lenkräder in beliebige Richtung weisen können. Dies erfordert eine Ausrichtung der Rollwagen und/oder deren Lenkräder vor oder nach der Neubeladung, um die beladenen Rollwagen anschließend optimal auf einer Palette gruppieren zu können.

Aufgabe der Erfindung ist es daher, eine Vorrichtung und ein Verfahren zu offenbaren, bei welchem die vorgenannten Probleme vermieden oder behoben werden.

Diese Aufgabe löst die vorliegende Erfindung mittels eines Verfahrens zum Depalettieren und Fördern von Rollwagen, so genannten Dollles (Dolly), wobei in einem Aufgabebereich die Rollwagen angeliefert, mittels einer Hubvorrichtung, beispielsweise einem Knickarmroboter bedarfsweise depalettiert und/oder abgestapelt und nachfolgend auf eine Transport- oder Förderstrecke überführt werden. Dabei wird die Ausrichtung ein es Rollwagens und/oder der Lenkräder vor dem Aufsetzen auf der Transport- und Förderstrecke mit mindestens einem Sensor erfasst, welcher mit einer geeigneten rechnergestützten Auswerte- und Steuereinheit verbunden ist. Die nachfolgende dreidimensionale Bewegung der Hubvorrichtung wird in Abhängigkeit von den erfassten Messwerten geregelt. Das Verfahren besteht weiterhin darin, dass bei einer Fehlstellung oder Fehlausrichtung mindestens eines der Lenkräder, der Rollwagen nach dem Anheben durch die Hubvorrichtung um eine horizontale Achse geneigt wird, so dass die in der Regel zwei Lenkräder gemeinsam über oder unter den starren Rädern stehen und sich die zwei Lenkräder mittels Schwerkraft gleich oder im Wesentlichen gleich ausrichten. Anschließend wird der Rollwagen auf die Transport - und Förderstrecke aufgesetzt.
Das Verfahren hat den großen Vorteil, dass für die Ausrichtung der Lenkräder kein separater Verfahrens- schritt oder Vorrichtung erforderlich ist, sondern diese Aus- oder Gleichrichtung bei der Überleitung des Rollwagens vom Anlieferbereich auf die Transport - und Förderstrecke parallel und ohne weitere Hilfsmittel oder Werkzeuge erfolgt.

Idealerweise besteht die Sensorvorrichtung aus einer oder mehreren digitalen Kameras, mittels welcher Bilddaten (Ist-Bilder) erfasst und In der rechnergestützten Auswerte- und Steuereinheit mit Bildmustern (Soll-Bildern) oder sonstigen Vorgaben abgeglichen werden. Baslerand hierauf wird nachfolgend die dreidimensionale Bewegung der Hubvorrichtung gesteuert, um eine optimale und einheltliche Positionierung und Ausrichtung der Rollwagen sowie deren Räder auf der Transport- oder Förderstrecke zu erreichen.

Der Kippwinkel α beträgt Idealerweise 30° bis 90°. Das Ausrichten der Räder kann durch Rüttel- und/oder gezielte Beschleunigungsabläufe der Hubvorrichtung unterstützt werden. Die Rüttel- und/oder Beschleunigungsabläufe werden bedarfsweise mehrfach wiederholt. Weiterhin wird der Rollwagen idealerweise so auf der Transport- und Förderstrecke aufgesetzt, dass die Lenkräder tiefer als die starren Räder sind und zuerst aufgesetzt werden. Anschließend wird der Rollwagen um die horizontale Achse in die Waagerechte gekippt. Beim Aufsetzten des Rollwagens, zu Beginn des Kippvorgangs in die Horizontale, beträgt der Kippwinkel α idealerweise 30° bis 60°.

Da die vertikalen Lager der Lenkräder leicht verschmutzen, so dass eine Drehung allein aufgrund der Schwerkraft manchmal nicht oder nicht vollständig abläuft, besteht eine Optimlerung darin, auf der Transport- und Förderstrecke mindestens ein Führungselement vorzusehen, in welches mindestens eines der Lenkräder beim Aufsetzen des Rollwagens auf die Transport- und Führungsstrecke eingeführt wird, um eine ggf. vorhanden Fehlstellung oder unvollständige Ausrichtung des Lenkrades zu korrigieren.

Weiterhin ist es aus Gründen der Verfahrenssicherheit vorteilhaft, in dem Bereich, in welchem die Rollwagen nach der Überleitung auf die Transport- und Förderstrecke aufgesetzt werden, mindestens einen Positionssensor vorzusehen. Bei einer nicht optimalen Positionierung des Rollwagens auf der Transport- und Förderstrecke und/oder nicht optimalen Ausrichtung einen der Lenkräder, kann beispielsweise eine Störungsmeldung erzeugt werden und nachfolgend eine erneute Ausrichtung der Rollwagen und/oder deren Lenkräder oder Unterbrechung des Verfahrens erfolgen. Idealerweise erfasst der mindestens eine Positionssensor die Stellung der Räder eines Rollwagens direkt nach dem Aufsetzen auf die Transport- und Förderstrecke, Insbesondere die Position der ersten beiden Räder.

Von der Erfindung ist auch eine Vorrichtung zum Depalettieren und Fördern von Rollwagen umfassend, die einen Aufgabebereich zum Anliefern von in der Regel gestapelten Rollwagen, mindestens eine Hubvorrichtung zum Anheben und Überleiten der Rollwagen auf eine angrenzende Transport- und Förderstrecke umfasst. Insbesondere weist die Vorrichtung mindestens einen Sensor und eine rechnergestützte Auswerte- und Steuereinheit auf, mittels welcher die Ausrichtung der Roliwagen und deren Lenkräder im Anlieferbereich erfasst und die nachfolgende Bewegungen des mindestens einen Huborgans zur optimalen Überieitung und Positionierung der Rollwagen auf der Transport- und Förderstrecke gesteuert und/oder geregelt werden kann. Der Sensor kann in einer Variante der Vorrichtung ein opto-elektronischer Sensor sein, wobei er idealerwelse eine oder mehrere digitale Kameras umfasst. Die Hubvorrichtung ist dabei idealerweise ein Einarm- oder Knickarmroboter, welcher eine fließende, dreidimensionale Bewegung ermöglicht.

Eine weitere Verbesserung besteht darin, dass ein mit der rechnergestützten Auswerte- und Steuereln helt verbundener Positionssensor vorgesehen Ist, welcher die Stellung der Räder eines Rollwagens direkt nach dem Aufsetzen auf die Transport- und Förderstrecke erfasst und diese Messwerte an die Auswerte- und Steuereinhelt zur weiteren Verarbel-tung weiterleitet. Dieser kann auf oder an der Transport- und Förderstrecke angeordnet sein und die korrekte Position der Räder erfasst. Hierbei stehen dem Fachmann viele unterschiedliche Arten von Sensoren zur Verfügung. Vorteilhaft sind Sensoren, die In der Schlene oder der Lauffläche selbst angeordnet sind und induktiv oder als Drucksensor die Radposition ermitteln.

Alternativ kann der Positionssensor an oder in der Hubvorrichtung angeordnet sein. Dabei wird aus der erreichten Endposition der Hubvorrichtung auf die korrekte Positionierung oder Fehlstellung der Rollwagen und/oder deren Lenkräder geschlossen, Hierzu kann es vorteilhaft sein, wenn auf der Transport- und Förderstrecke geeignete Anschlagskanten und/oder Signalgeber vorgesehen sind, die direkt oder über die rechnergestützte Auswerte- und Steuereinheit mit dem Positionssensor am oder Im Einarm- oder Knickarmroboter kommunizieren.

Bei einer verbesserten Variante ist auf der Transport- und Förderstrecke mindestens ein Führungselement vorgesehen, in welches mindestens eines der Lenkräder beim Aufsetzen des Rollwagens auf die Transport- und Führungsstrecke einführbar ist, wobei ein Führungselement idealerweise für je ein Lenkrad vorgesehen wird. Somit können ggf. vorhanden Fehlstellung der Lenkräder korrigiert und das Aufsetzten der Rollwagen erleichtert werden. Hierzu stehen dem Fachmann viele Ausführungsformen zur Verfügung. Eine besonders geeignete Variante eines solchen Führungselemerits weist nach oben über die Schiene oder Laufbahn der Transport- und Führungsstrecke herausragende, trichterförmig nach außen geneigte Seitenwände auf. Durch die trichterartige Konstru ktlon werden die Lenkräder geführt und ausgerichtet. Bei einer verbesserten Variante sind die Führungselement versenkbar, so dass diese nach dem Aufsetzen eines Rollwagens und bei dem Transport desselben nicht an diesem verhaken können.

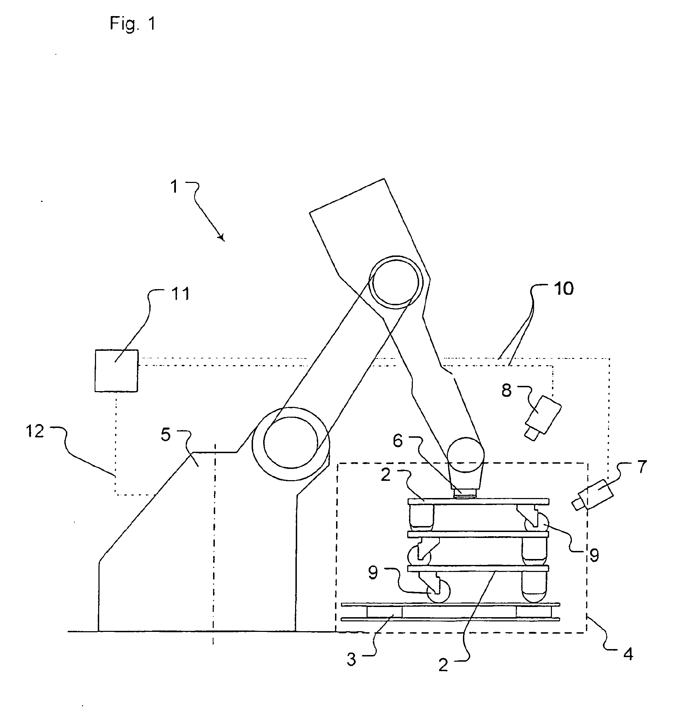

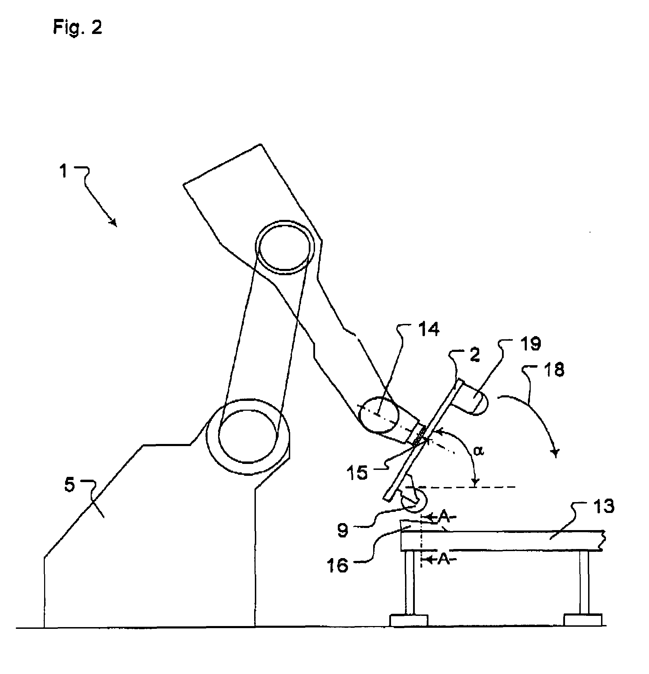

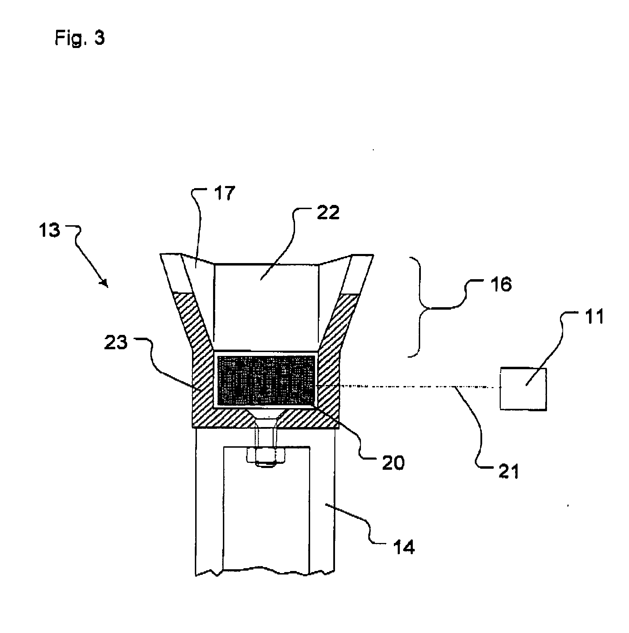

Die Figuren 1 und 2 zeigen beisplelhaft die Vorrichtung zum Depalettieren und Fördern von Rollwagen und Figur 3 zeigt in einer Schnlttzeichnung das Führungselement im Detail.

Fig. 1 zeigt die allgemein mit 1 bezeichnete Vorrichtung zum Dapalettleren und Fördern von Rollwagen beim Greifen eines ersten Rollwagens 2, der oben auf einem Stapel von mehreren Rollwagen steht. Der Stapel selbst wir von einer Palette 3 getragen. Die Rollwagen 2 und die Palette 3 befinden sich im Aufgabebereich 4. Der Knickarmroboter 5 greift mit einem nicht näher dargestellten Greifwerkzeug 6 den obersten Rollwagen 2. Mittels digitaler Kameras 7 und 8 wird die Ausrichtung des Rollwagens 2 und der Lenkräder 9 erfasst und mittels Datenleitung 10 die erfassten IST-Bllder zur rechriergestützten Auswerte- und Steuereinheit 11 gesendet, ausgewertet und anschließend via Datenleitung 12 die Steuerung des Knickarmroboters 5 veranlasst. Natürlich können die Datenleitungen 10 und 12 auf für die Übertragungswege im Falle einer drahtlosen Datenübertragung stehen. In dem gezeigten Beispiel erfasst die digitale Kamera 7 die Ausrichtung der Lenkränder 9 und die digitale Kamera 8 die Ausrichtung und Position des eigentlichen Rollwagens 2,

In Fig. 2 zeigt den Vorgang des Aufsetzens des Rollwagens 2 auf die Transport und Förderstrecke 13. Der Rollwagen 2 wurde beim Überheben aus dem Aufgabebereich um die Achse 14 gedreht und im Winkel α um die Achse 15 gekippt. Die Achse 15 steht in Fig. 2 lotrecht auf der Zeichenebene und ist als kleines Kreuz angedeutet. Beim Absetzen des Rollwagens 2 auf die Transport- und Förderstrecke 13, senkt der Rollwagen 2 sich in Richtung des Pfeils 18 und vollzieht gleichzeitig eine Kippbewegung in Richtung des Pfeils 18. Die starren Räder 19 werden nach den Lenkrädern 9 aufgesetzt, wobei die Lenkräder 9 in dem Führungselement 16 nachjustiert und geleitet werden.

Fig. 3 zeigt einen Schnitt durch eine Schiene der Transport- und Förderstrecke 13, entlang der Schnittlinie AA (Fig. 2), wobei die Transport- und Förderstrecke 13 zwei im Wesentlichen identisch aufgebaute Schienen 23 umfasst, auf der die Rollwagen 2 zweizeitig geführt gefördert werden Die Transport- und Förderstrecke 13 weist Stützfüße 14 und im Wesentlichen horizontal ausgerichtete Schienen 23 auf. In dem gezeigten Schnitt AA geht die Schiene 23 nahtlos in das Führungselement 16 über, von dem die beiden nach außen geneigten Seltentelle 17 und die Rückwand 22 dargestellt sind. Die Rückwand 22 ist in zwei Abschnitte geteilt, von denen einer senkrecht und der andere nach hinten geneigt ist. In dem senkrechten Abschnitt der Rückwand 22 ist ein Positionssensor 20 eingebracht. Eine Fehlstellung des Lenkrades 9 wird induktiv detektiert, wenn nicht beide Lenkräder 9 zu Beginn des Absetzens der Rollwagens 9 auf der Transport- und Förderstrecke an den Positionssensoren 20 anschlagen. Über die Datenleitung 21 werden diese Informationen an die rechnergestützte Auswerte- und Steuereinheit 11 übertragen und dort verarbeitet.

## Patentansprüche

1. Verfahren zum Depalettieren und Fördern von Rollwagen (2), so genannten Dollies (Dolly), welche mindestens zwei um eine vertikale Achse drehbar gelagerte Lenkräder (9) aufweisen, wobei in einem Aufgabebereich (4) die Rollwagen (2) angeliefert, mittels einer Hubvorrichtung (5), beispielsweise einem Knickarmroboter bedarfsweise depalettiert und/oder abgestapelt und nachfolgend auf eine, dem Aufgabebereich (4) angrenzende Transport- oder Förderstrecke (13), überführt werden, wobei die Ausrichtung eines Rollwagens (2) und/oder dessen Lenkräder (9) vor dem Aufsetzten auf der Transport- und Förderstrecke (13) mit mindestens einem Sensor (7, 8, 20) erfasst wird, welcher mit einer geeigneten rechnergestützten Auswerte- und Steuereinhelt (11) verbunden ist, wobei nachfolgend die dreidimensionale Bewegung der Hubvorrichtung (5) in Abhängigkeit von den erfassten Messwerten geregelt wird, **dadurch gekennzeichnet, dass** bei einer Fehlstellung oder Fehlausrichtung mindestens eines der Lenkräder (9), der Rollwagen (2) nach dem Anheben durch die Hubvorrichtung (5) um eine horizontale Achse geneigt wird, so dass sich die mindestens zwei Lenkräder (9) mittels Schwerkraft gleich oder im Wesentlichen gleich ausrichten und anschließend der Rollwagen (2) auf die Transport- und Förderstrecke (13) aufgesetzt wird.

2. Verfahren nach Anspruch 1, **dadurch gekennzeichnet, dass** mindestens eine Sensorvorrichtung eine digitale Kamera (7, 8) ist, und die erfassten Bilddaten (Ist-Bilder) in der rechnergestützten Auswerte- und Steuereinheit (11) mit Bildmustem (Soll-Bildern) abgeglichen werden, und **dadurch** die dreidimensionale Bewegung der mindestens einen Hubvorrichtung (5) gesteuert und/oder geregelt wird, um eine optimale und einheitliche Positionierung und Ausrichtung der Rollwagen (2) sowie deren Räder (9) auf der Transport- oder Förderstrecke (13) zu erreichen.

3. Verfahren nach einem der vorgenannten Ansprüche, **dadurch gekennzeichnet, dass** der Neigungswinkel α 30° bis 90° und beim Aufsetzten des Rollwagens (2) auf die Transport- und Förderstrecke (13) 30° bis 60° beträgt.

4. Verfahren nach einem der vorgenannten Ansprüche, **dadurch gekennzeichnet, dass** die Hubvorrichtung (2) zum Ausrichten der Räder (9) Rüttel- und/oder gezielte Beschleunlgungsabläufe vollzieht.

5. Verfahren nach einem der vorgenannten Ansprüche, **dadurch gekennzeichnet, dass** die Transport- und Förderstrecke (13) mindestens ein Führungselement (16) aufweist, in welches mindestens eines der Lenkräder (9) beim Aufsetzen des Rollwagens (2) auf die Transport- und Förderstrecke (13) In dieses Führungselement (16) eingeführt wird, um eine ggf. vorhanden Fehistellung des Lenkrades (9) zu korrigieren.

6. Verfahren nach einem der vorgenannten Ansprüche, **dadurch gekennzeichnet, dass** In dem Bereich, in welchem die Rollwagen (2) nach der Überleitung auf die Transport- und Förderstrecke (13) aufgesetzt werden mindestens ein Positionssensor (20) vorgesehen ist, so dass bei einer nicht optimalen Positionierung des Rollwagens (2) auf der Transport- und Förderstrecke (13) und/oder nicht optimalen Ausrichtung eines der Lenkräder (9) eine Störungsmeldung erzeugt wird, und nachfolgend eine erneute Ausrichtung der Rollwagen (2) und/oder deren Lenkräder (9) oder Unterbrechung des Verfahrens erfolgen kann.

7. Verfahren nach Anspruch 6, **dadurch gekennzeichnet, dass** der mindestens eine Positionssensor (20) die Stellung der Räder eines Rollwagens (2) direkt nach dem Aufsetzen auf die Transport- und Förderstrecke (13) erfasst.

8. Vorrichtung zum Depalettieren und Fördern von Rollwagen (2), so genannten Dollies (Dolly), welche mindestens zwei um eine vertikale Achse drehbar gelagerte Lenkräder (9) aufweisen, umfassend einen Aufgabebereich (4), zum Anliefern von in der Regel gestapelter Rollwagen (2), mindestens eine Hubvorrichtung (5), zum Anheben und Überlelten der Rollwagen (2) auf eine angrenzende Transport- und Förderstrecke (13), **dadurch gekennzeichnet, dass**
mindestens ein Sensor (7. 8, 20) und eine rechnergestützte Auswerte- und Steuereinheit (11) umfasst sind,
- mittels weicher die Ausrichtung der Rollwagen (2) und deren Lenkräder (9) im Aufgabebereich (4) erfasst und
- die nachfolgende Bewegungen des mindestens einer Hubvorrichtung (5) zur optimaien Überleitung und Positionierung der Rollwagen (2) auf der Transport- und Förderstrecke gesteuert (13) und/oder geregelt werden kann.

9. Vorrichtung nach Anspruch 8, **dadurch gekennzeichnet, dass** der Sensor ein opto-elektronischer Sensor und Idealerweise eine digitale Kamera (7, 8) ist.

10. Vorrichtung nach einem der Ansprüche 8 oder 9, **dadurch gekennzeichnet, dass** die Hubvorrichtung (5) ein Knickarmroboter ist.

11. Vorrichtung nach einem der Ansprüche 8 bis 10, **dadurch gekennzeichnet, dass** mindestens ein mit der rechnergestützten Auswerte- und Steuereinhelt (11) verbundener Positionssensor (20) vorgesehen ist, welcher die Stellung der Räder eines Rollwagens (2) direkt nach dem Aufsetzen auf die Transport- und Förderstrecke (13) erfasst und diese Messwerte an die Auswerte- und Steuereinhelt (11) zur weiteren Verarbeitung weiterleitbar sind.

12. Vorrichtung nach Anspruch 11, **dadurch gekennzeichnet, dass** der mindestens eine Positionssensor (20) auf oder an der Transport- und Förderstreoke (13) angeordnet ist und die korrekte Position der Räder erfasst.

13. Vorrichtung nach Anspruch 12, **dadurch gekennzeichnet, dass** der mindestens eine Posotoonssensor (20) an oder In der Hubvorrichtung (5) angeordnet ist, wobei aus der erreichten Endposition der Hubvorrichtung (6) die Richtigkeit oder Fehlatellung der Rollwagen (2) und/oder deren Lenkräder (9) auf der Transport- und Förderstrecke (13) erfasst, wozu auf der Transport- und Förderstrecke (13) geeignete Anschlagekanten und/oder Signeigeber vorgesehen sein können.

14. Vorrichtung nach einem der Ansprüche 8 bis 13, **dadurch gekennzeichnet, dass** auf der Transport- und Förderstrecke (13) mindestens ein Führungselement (16) vorgesehen ist, in welches mindestens eines der Lenkräder (9) beim Aufsetzen des Rollwagens (2) auf die Transport- und Führurigsstrecke (13) einführbar ist, um eine ggf. vorhanden Fehlstellung des Lenkrades (9) zu korrigieren.

15. Vorrichtung nach Anspruch 14, **dadurch gekennzeichnet, dass** dieses Führungselement (16) noch oben über die Schiene (23) oder Laufbahn der Transport- und Führungsstrecke ragt und trichterförmig nach außen geneigte seitenwände (17, 22) aufweist, die sich nach unten, In Richtung zur Schiene (23) oder Laufbahn, annähern.

16. Vorrichtung nach einem der Ansprüche 14 oder 15, **dadurch gekennzeichnet, dass** das Führungselement (16) versenkbar ist.

## Claims

1. Process for the depalletization and conveying of flat trucks (2), which are known as dollies, which have at least two bearing-supported steering wheels (9) rotatable around a vertical axis, whereby in a delivery area (4), the dollies (2) delivered by means of a lifting device (5), for example an articulated robotic arm de-palletized and/or de-stacked as required, are then transferred to a transporting and conveying track (13) that adjoins the delivery area (4), whereby the aligning of a dolly(2) and/or of its steering wheels (9) is captured by at least one sensor (7, 8, 20), which is connected to a suitable computer-aided analysis and control unit (11), whereby consequently before the placing onto the transporting and conveying track (13), the three-dimensional movement of the lifting device (5) is controlled in accordance with the measured values that have been captured, **characterized in that** in the event of an incorrect positioning or faulty alignment of at least one of the steering wheels (9), the dolly (2) after being lifted by the lifting device (5) is lowered around a horizontal axis, so that at least two steering wheels (9) are similarly or essentially similarly oriented by the force of gravity and then the dolly (2) is placed on the transporting and conveying track (13).

2. Process as per Claim 1, **characterized in that** at least one sensing device is a digital camera (7, 8) and the captured (actual image) in the computer-aided analysis and control unit (11) equate to the sample images (correct images) and by this means the three-dimensional movement of at least one lifting device (5) is controlled and/or adjusted, in order to achieve an optimal and uniform positioning and orientation of the dollies (2) and of their wheels (9) on the transporting and conveying track (13).

3. Process as per one of the preceding claims **characterized in that** the lowering angle is at from 39° to 90° and when placing the dolly (2) onto the transporting and conveying track (13) is at from 30° to 60°.

4. Process as per one of the preceding claims **characterized in that** the lifting device (2) performs shaking and/or targeted acceleration processes for orienting the wheels (9).

5. Process as per one of the preceding claims **characterized in that** the transporting and conveying track (13) has at least one guiding element (16), in which at least one of the steering wheels (9) when the dolly (2) is being placed on the transporting and conveying track (13) is conducted into this guiding element (16) in order to rectify any possible incorrect positioning of the steering wheel (9).

6. Process as per one of the preceding claims, **characterized in that** in the area, in which the dollies are placed after the transfer to the transporting and conveying track (13), there is at least one positioning sensor (20) provided, so that in the event of the dolly (2) not being optimally positioned on the transporting and forwarding track (13) and/or of a wheel (9) not being optimally oriented, a fault message is generated and consequently a repeated orientation of the dolly (2) and/or of the steering wheel (9) and/or a stoppage of the process can be made.

7. Process as per Claim 6 **characterized in that** the positioning sensor (20) of which there is at least one, captures the positioning of the wheels of a dolly (2) directly after the placing on the transporting and conveying track (13).

8. Device for the de-palletization and conveying of flat trucks (2), which are kniwn as dollies, which have at least two bearing-supported steering wheels (9) rotatable around a vertical axis, including a receiving area (4) for the delivery of, generally speaking, palletized dollies (2), at least one lifting device (5) for lifting and transferring the dollies (2) onto an adjoining transporting and conveying track (13), **characterized in that**:
at least one sensor (7, 8, 20) and one computer-aided analysis and control unit (11) are included and
- by means of which the orientation of the dollies (2) and of their steering wheels (9) are detected in the receiving area (4) and
- the subsequent movements of at least one lifting device (5) can be controlled and/or adjusted on the transporting and conveying track (13) for the optimal transfer and positioning of the dolly (2).

9. Device as per Claim 8, **characterized in that** the sensor is an optoelectronic sensor and ideally a digital camera (7, 8)

10. Device as per one of the claims 8 or 9 **characterized in that** the lifting device (5) is an articulated robotic arm.

11. Device as per one of the Claims 8 to 10, **characterized in that** at least one positional sensor (20) which is connected to the computer-aided analysis and control unit (11) is provided, which captures the positioning of the wheels of a dolly (2) directly after its has been placed on the transporting and conveying track (13) and these measured values are able to be transferred to the analysis and control unit (11) for further processing.

12. Device as per Claim 11 **characterized in that** the positional sensor (20), of which there is at least one is assigned at or onto the transporting and conveying track (13), captures the correct positioning of the wheels.

13. Device as per Claim 12, **characterized in that** the positional sensor (20) of which there is at least one, is fitted to or into the lifting device (5), whereby when the lifting device (6) has reached its final position the correct or incorrect final positioning of the dollies (2) and /or of their steering wheels (9) on the transporting and conveying track (13) is captured, for which purpose suitable cut-off edges and/or signal transmitters can be provided.

14. Device as per one of the Claims 8 to 13 **characterized in that** at least one guiding element (16) is provided, on the transporting and conveying track in which at least one of the steering wheels (9) when the dolly is being placed on transporting and forwarding track (13) can be utilized so as to rectify a possible incorrect positioning of the steering wheel (9).

15. Device as per Claim 14 **characterized in that** this guiding element (16) makes adjustments whilst still above the rails (23) or the track of the transporting and conveying track and has funnel-shaped outwards sloping side walls (17, 22), which converge towards the rails (23) or track.

16. Device as per one of the Claims 14 or 15, **characterized in that** the guiding element (16) is retractable.

## Revendications

1. Procédé pour la dépalettisation et le transport de chariots (2) appelés "dollies" (chariots pour conteneurs), qui présentent au moins deux roues de guidage (9) montées de façon rotative autour d'un axe vertical, les chariots (2) étant livrés dans une zone d'alimentation (4), étant éventuellement dépalettisés et/ou désempilés au moyen d'un dispositif de levage (5), par exemple un robot à bras articulé et étant transférés ensuite sur un tronçon de transport et de guidage (13) contigu à la zone d'alimentation (4), l'orientation d'un chariot (2) et/ou de ses roues de guidage (9) étant enregistrée avant la pose sur le tronçon de transport et de guidage (13) avec au moins un capteur (7, 8, 20), lequel est relié à une unité d'analyse et de commande (11) appropriée et automatisée, le déplacement en trois dimensions du dispositif de levage (5) étant réglé ensuite en fonction des valeurs mesurées enregistrées, **caractérisé en ce que**, dans le cas d'une mauvaise position ou d'une mauvaise orientation d'au moins l'une des roues de guidage (9), le chariot (2) est incliné après le soulèvement par le dispositif de levage (5) autour d'un axe horizontal, de sorte que les au moins deux roues de guidage (9) s'orientent de façon identique ou sensiblement identique au moyen de la force de gravité et le chariot (2) est posé ensuite sur le tronçon de transport et de guidage (13).

2. Procédé selon la revendication 1, **caractérisé en ce qu'**au moins un dispositif capteur est une caméra (7, 8), numérique et les données d'image enregistrées (images réelles) sont ajustées dans l'unité d'analyse et de commande (11) assistée avec des modèles d'image (images théoriques) et le déplacement en trois dimensions du au moins un dispositif de levage (5) est commandé et/ou réglé ainsi, afin d'obtenir un positionnement et une orientation optimum et homogènes des chariots (2) et de leurs roues (9) sur le tronçon de transport et de guidage (13).

3. Procédé selon l'une quelconque des revendications précédentes, **caractérisé en ce que** l'angle d'inclinaison α va de 30° à 90° et de 30° à 60° lors de la pose du chariot (2) sur le tronçon de transport et de guidage (13).

4. Procédé selon l'une quelconque des revendications précédentes, **caractérisé en ce que** le dispositif de levage (2) effectue des manoeuvres de secousse et/ou des manoeuvres d'accélération ciblées pour l'orientation des roues (9).

5. Procédé selon l'une quelconque des revendications précédentes, **caractérisé en ce que** le tronçon de transport et de guidage (13) présente au moins un élément de guidage (16) dans lequel au moins l'une des roues de guidage (9) est introduite dans cet élément de guidage (16) lors de la pose du chariot (2) sur le tronçon de transport (13), afin de corriger une mauvaise position éventuelle de la roue de guidage (9).

6. Procédé selon l'une quelconque des revendications précédentes, **caractérisé en ce qu'**au moins un capteur de position (20) est prévu dans la zone dans laquelle les chariots (2) sont posés après le transfert sur le tronçon de transport et de guidage (13), de sorte que, dans le cas d'un positionnement non optimal du chariot (2) sur le tronçon de transport et de guidage (13) et/ou d'une orientation non optimale de l'une des roues de guidage (9), un message d'incident est généré, et ensuite un nouvelle orientation des chariots (2) et/ou de leurs roues de guidage (9) ou une interruption du procédé peut intervenir.

7. Procédé selon la revendication 6, **caractérisé en ce que** le au moins un capteur de position (20) enregistre la position des roues d'un chariot (2) directement après la pose sur le tronçon de transport et de guidage (13).

8. Dispositif pour la dépalettisation et le transport de chariots (2), appelés "Dollies" (chariots pour conteneurs), qui présentent au moins deux roues de guidage (9) montées de façon rotative autour d'un axe vertical, comprenant une zone d'alimentation (4) pour la livraison de chariots (2) généralement empilés, au moins un dispositif de levage (5) pour le soulèvement et le transfert des chariots (2) sur un tronçon de transport et de guidage (13) contigu, **caractérisé en ce que**
au moins un capteur (7, 8, 20) et une unité d'analyse et de commande (11) automatisée sont inclus,
- unité au moyen de laquelle l'orientation des chariots (2) et de leurs roues de guidage (9) dans la zone d'alimentation (4) peut être enregistrée et
- les déplacements consécutifs du au moins un dispositif de levage (5) pour le transfert et le positionnement optimum des chariots (2) sur le tronçon de transport et de réglage (13) peuvent être commandés et/ou réglés.

9. Dispositif selon la revendication 8, **caractérisé en ce que** le capteur est un capteur optoélectronique et idéalement une caméra (7, 8) numérique.

10. Dispositif selon l'une quelconque des revendications 8 ou 9, **caractérisé en ce que** le dispositif de levage (5) est un robot à bras articulé.

11. Dispositif selon l'une quelconque des revendications 8 ou 10, **caractérisé en ce qu'**au moins un capteur de position (20) relié à l'unité d'analyse et de commande (11) automatisée est prévu, lequel enregistre la position des roues d'un chariot (2) directement après la pose sur le tronçon de transport et de guidage (13) et ces valeurs mesures peuvent être transmises à l'unité d'analyse et de commande (11) pour le traitement ultérieur.

12. Dispositif selon la revendication 11, **caractérisé en ce que** le au moins un capteur de position (20) est disposé sur le tronçon de transport et de guidage (13) ou près de celui-ci et enregistre la position correcte des roues.

13. Dispositif selon la revendication 12, **caractérisé en ce que** le au moins un capteur de position (20) est disposé près du dispositif de levage (5) ou dans celui-ci, enregistrant la position correcte ou la mauvaise position des chariots (2) et/ou de leurs roues de guidage (9) sur le tronçon de transport et de guidage (13) à partir de la position finale atteinte du dispositif de levage (5), ce pourquoi des arêtes de butée et/ou des générateurs de signaux appropriés peuvent être prévus sur le tronçon de transport et de guidage (13).

14. Dispositif selon l'une quelconque des revendications 8 à 13, **caractérisé en ce que** sur le tronçon de transport et de guidage (13) est prévu au moins un élément de guidage (16) dans lequel au moins l'une des roues de guidage (9) peut être introduite lors de la pose du chariot roulant (2) sur le tronçon de transport et de guidage (13), afin de corriger une éventuelle mauvaise position de la roue de guidage (9).

15. Dispositif selon la revendication 14, **caractérisé en ce que** cet élément de guidage (16) dépasse vers le haut du rail (23) ou de la voie de roulement du tronçon de transport et de guidage et présente des parois latérales (17, 22) inclinées en forme d'entonnoir vers l'extérieur, qui se rapprochent vers le bas, en direction du rail (23) ou de la voie de roulement.

16. Dispositif selon l'une quelconque des revendications 14 ou 15, **caractérisé en ce que** l'élément de guidage (16) est escamotable.
